# EUROPÄISCHE PATENTANMELDUNG

(11) **EP 1 413 554 A1**
(43) Veröffentlichungstag der Anmeldung: **28.04.2004**
(21) Anmeldenummer: 02023801.0
(22) Anmeldetag: 23.10.2002
(51) Int. Cl.: C02F 1/16, F01K 23/06, F02C 6/18

(54) **Gas- und Dampfkraftwerk zur Wasserentsalzung**

(71) Anmelder: SIEMENS AKTIENGESELLSCHAFT, 80333 München (DE)
(72) Erfinder: Gralla, Eberhard, 91325 Adelsdorf (DE)

(57) **Zusammenfassung**

Bei einem erfindungsgemäßen Gas- und Dampfkraftwerk (1) zur Wasserentsalzung ist zur Vorwärmung des zu entsalzenden Wassers eine Wärmetauscherfläche (31) vorgesehen, die im Bereich des kalten Endes eines Abhitzekessels (9) angeordnet ist.

## Beschreibung

Die Erfindung betrifft ein Gas- und Dampfkraftwerk zur Wasserentsalzung, insbesondere zur Meerwasserentsalzung.

Zur Aufbereitung von Salz enthaltendem Wasser, beispielsweise zu Trink- und/oder Brauchwasser, ist eine möglichst effiziente Entsalzung des Wassers notwendig.
Insbesondere in Gebieten mit Wassermangel, in welchen lediglich Salz enthaltendes Meerwasser zur Verfügung steht, ist die Aufbereitung des Meerwassers mittels Entsalzung oftmals lebensnotwendig.

Dazu muss das Wasser - meist in mehreren Stufen - aufgeheizt werden, um den Salzanteil weitgehend abtrennen zu können. Hierfür ist eine relativ große Menge an Energie notwendig.

Der Erfindung liegt daher die Aufgabe zu Grunde, ein Gas- und Dampfkraftwerk zur Wasserentsalzung anzugeben, mittels welchem die Wasserentsalzung bei besonders guter Energieausnutzung möglich ist.

Die Aufgabe wird erfindungsgemäß gelöst durch ein Gas- und Dampfkraftwerk zur Wasserentsalzung, mit einem Abhitzekessel, in welchen das heiße Abgas einer Gasturbine einleitbar und mittels welchem Prozess- und/oder Hilfsdampf für eine Dampfturbine durch Nutzung der im Abgas enthaltenen Wärmeenergie mittels Wärmetausch erzeugbar ist, wobei eine Wärmetauscherfläche im Bereich des kalten Endes des Abhitzekessels angeordnet ist, welche zur Aufheizung von zu entsalzendem Wasser, insbesondere Meerwasser, zumindest eine Teilmenge des zu entsalzenden Wassers zuführbar und mittels Wärmetausch mit dem Abgas aufheizbar ist.

Die Erfindung geht dabei von der Überlegung aus, dass bei herkömmlichen Gas- und Dampfkraftwerken, denen eine separate Einrichtung zur Wasserentsalzung nachgeschaltet ist, die Austrittstemperatur des Abgases aus dem Abhitzekessel noch genügend Wärmeenergie enthält, um zumindest eine Vorwärmung des zu entsalzenden Wassers mit Hilfe des Abhitzekessels vornehmen zu können, ohne dabei auf zusätzliche, externe Wärmequellen zurück greifen zu müssen.

Prozessbedingt liegt die Austrittstemperatur des Abgases aus dem Abhitzekessel bekannter Gas- und Dampfkraftwerk zur Wasserentsalzung mit nachgeschalteter Einrichtung zur Wasserentsalzung ungefähr zwischen 120°C und 150°C; derartig hohe Austrittstemperaturen sind hauptsächlich durch die relativ hohe Temperatur des von der Entsalzungsanlage kommenden Kondensats bedingt, welches bei der Wasserentsalzung mittels einer bekannten Einrichtung zur Wasserentsalzung anfällt und in den Gas- und Dampf-Prozess rückgespeist wird.

Die genannten hohen Austrittstemperaturen des Abgases aus dem Kessel können nun mittels eines erfindungsgemäßen Gas- und Dampfkraftwerks zur Wasserentsalzung zur Aufheizung des zu entsalzenden Wassers genutzt werden, wofür die erfindungsgemäße Wärmetauscherfläche vorgesehen ist.

Dadurch ist es u.a. möglich, die Austrittstemperatur des Abgases auf den Wert bekannter Gas- und Dampfkraftwerke ohne Einrichtung zur Meerwasserentsalzung zu senken, welcher in etwa 80°C beträgt, wobei bei der Erfindung die Temperaturdifferenz von ca. 40 °C bis 70 °C zur Aufheizung des zu entsalzenden Wassers genutzt wird.

Die Ausnutzung der im Abgas enthaltenen Wärmeenergie ist dadurch besonders gut.

In vorteilhafter Ausgestaltung der Erfindung ist die Wärmetauscherfläche in Strömungsrichtung des Abgases die letzte Wärmetauscherfläche im Abhitzekessel.

Bei dieser Ausführung der Erfindung kann durch geeignete Auslegung der Wärmetauscherfläche dafür gesorgt werden, dass die Abgastemperatur nach dieser Wärmetauscherfläche durch den Wärmetausch mit der Wärmetauscherfläche auf die bei Gas- und Dampfkraftwerken gewünschte und vorteilhafte Abgasaustrittstemperatur von etwa 80°C oder einen anderen gewünschten Wert gesenkt wird. Die Energieausnutzung ist dann besonders effizient.

Vorteilhaft ist der Abhitzekessel befeuert.

Die zusätzliche Befeuerung des Abhitzekessels mittels eines, insbesondere fossilen, Brennstoffs erlaubt u.a. eine genaue Einstellung des Abgastemperaturfelds im Abhitzekessel. Dadurch kann der Abhitzekessel, welcher in der Regel eine Anzahl an Wärmetauschern zur Erzeugung von Prozess- und/oder Hilfsdampf umfasst, auf den gewünschten Temperaturniveaus mit hohem Wirkungsgrad betrieben werden. Des Weiteren ist eine Erhöhung der Erzeugung an Prozess- und/oder Hilfsdampf realisiert.

In einer weiteren vorteilhaften Ausgestaltung der Erfindung liegt die Temperatur des Abgases vor dem Wärmetausch mit der Wärmetauscherfläche im Bereich zwischen etwa 120°C und 150°C.

Dieser Temperaturbereich entspricht der Abgasaustrittstemperatur bekannter Gas- und Dampfkraftwerke zur Wasserentsalzung mit nachgeschalteter, separater Einrichtung zur Wasserentsalzung. So ist es möglich, derartige, bekannte Anlagen auf einfache Weise mittels der erfindungsgemäßen Wärmetauscherfläche zur Erfindung weiter zu bilden und dabei die Energieausnutzung zu erhöhen, wobei die Abgastemperatur vor der erfindungsgemäßen Wärmetauscherfläche durch den Wärmetausch mit der erfindungsgemäßen Wärmetauscherfläche um ca. 40°C bis 70°C abgesenkt wird und diese Temperaturdifferenz zur Vorwärmung des zu entsalzenden Wassers genutzt wird.

Im Folgenden wird ein Ausführungsbeispiel der Erfindung näher dargestellt.

Es zeigt:
FIG ein erfindungsgemäßes Gas- und Dampfkraftwerk zur Wasserentsalzung.

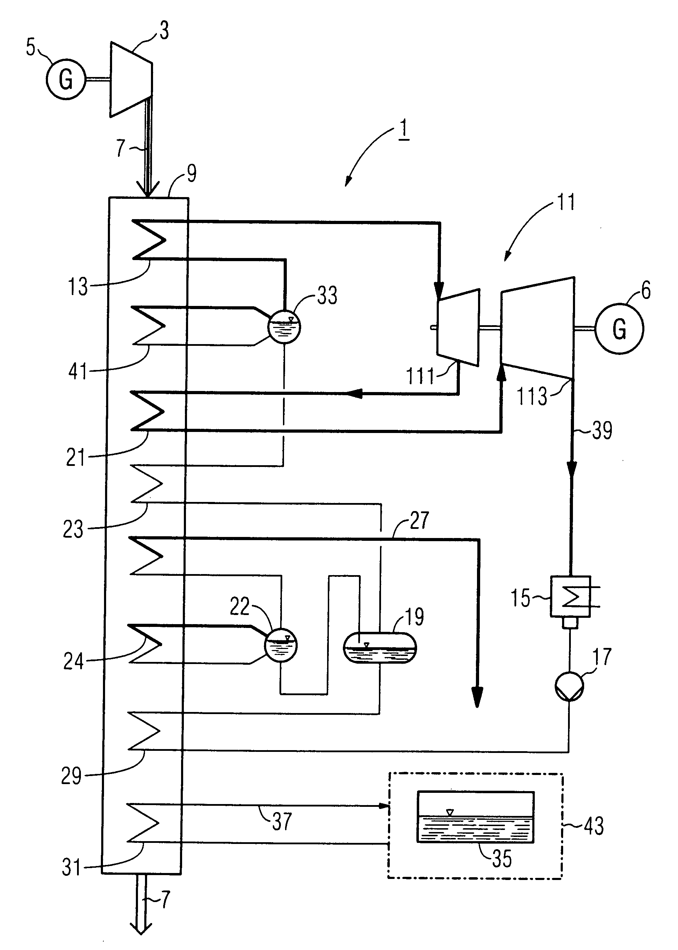

In der Figur ist schematisch ein erfindungsgemäßes Gas- und Dampfkraftwerk 1 zur Meerwasserentsalzung dargestellt. Das Gas- und Dampfkraftwerk 1 umfasst eine Gasturbine 3 sowie eine Dampfturbine 11, welche zur Erzeugung von elektrischer Energie jeweils an einen Generator 5, 6 gekoppelt sind.

Abgas 7 der Gasturbine 3 ist insbesondere zur Erzeugung von Prozess- und Hilfsdampf für die Dampfturbine 11 in einen Abhitzekessel 9 eingeleitet.

Beim Betrieb der Gas- und Dampfkraftwerke 1 fällt entspannter Dampf 39 an, welcher eine Niederdruckstufe 113 der Dampfturbine 11 verlässt und einem Kondensator 15 zugeleitet wird. Das dort aufbereitete Kondensat wird mittels einer Kondensatpumpe 17 einem im Abhitzekessel 9 angeordneten Kondensatvorwärmer 29 zugeführt und anschließend als vorgewärmtes Kondensat einem Speisewasserbehälter 19 zugeleitet. Speisewasser aus dem Speisewasserbehälter 19 wird mittels eines Speisewasservorwärmers 23 erhitzt und einer Dampftrommel 33 zugeführt. Letztere ist mit einem Verdampfer 41 verbunden. Der Dampftrommel 33 wird Dampf entnommen und einem Hochdrucküberhitzer 13 zugeführt, mittels welchem Prozessdampf für eine Hochdruckstufe 111 der Dampfturbine 11 erzeugt ist.

Teilentspannter Dampf aus der Hochdruckstufe 111 wird mittels eines Zwischenüberhitzers 21 aufgeheizt und der Niederdruckstufe 113 zugeführt.

Speisewasser aus dem Speisewasserbehälter 19 wird einer Niederdruck-Dampftrommel 22 zugeführt, welche mit einem Niederdruck-Verdampfer 24 verbunden ist. Der Niederdruck-Dampftrommel 22 wird Dampf entnommen und einem Niederdruck-Überhitzer 25 zugeführt, mittels welchem Niederdruck-Dampf 27 für eine Anlage 43 zur Meerwasserentsalzung erzeugt wird. Die Anlage 43 umfasst ein Reservoir 35 für zu entsalzendes Meerwasser. Aus diesem Reservoir 35 wird Meerwasser entnommen und einer Wärmetauscherfläche 31 zugeführt, welche im Bereich des kalten Endes des Abhitzekessels angeordnet ist. Mittels dieser Wärmetauscherfläche 31 wird das Meerwasser vorgewärmt und als vorgewärmtes Meerwasser 37 zurück zur Anlage 43 zur weiteren Behandlung gespeist.

Es erübrigt sich eine separate Wärmequelle zur Vorwärmung des zu entsalzenden Meerwassers; dazu ist bei der Erfindung die Wärmetauscherfläche 31 vorgesehen, mittels welcher die im Abgas 7 enthaltene Wärmemenge zur Vorwärmung des Meerwassers ausgenutzt wird. Hierfür steht eine Temperaturdifferenz von ca. 40 °C bis 70 °C zur Verfügung.

Der entspannte Dampf 39 kann auch anstelle einer direkten Einleitung in den Kondensator 15 unkondensiert zur Anlage 43 geleitet und dort genutzt werden; in diesem Falle kann innerhalb der Anlage 43 ein Kondensator vorgesehen sein.

## Patentansprüche

1. Gas- und Dampfkraftwerk (1) zur Wasserentsalzung, mit einem Abhitzekessel (9), in welchen das heiße Abgas (7) einer Gasturbine (3) einleitbar und mittels welchem Prozessund/oder Hilfsdampf für eine Dampfturbine (11) durch Nutzung der im Abgas (7) enthaltenen Wärmeenergie mittels Wärmetausch erzeugbar ist,
**gekennzeichnet durch**
eine Wärmetauscherfläche (31), welche im Bereich des kalten Endes des Abhitzekessels (9) angeordnet ist und welcher zur Aufheizung von zu entsalzendem Wasser (35), insbesondere Meerwasser, zumindest eine Teilmenge des zu entsalzenden Wassers (35) zuführbar und mittels Wärmetausch mit dem Abgas (7) aufheizbar ist.

2. Gas- und Dampfkraftwerk (1) nach Anspruch 1,
**dadurch gekennzeichnet, dass** die Wärmetauscherfläche (31) in Strömungsrichtung des Abgases (7) die letzte Wärmetauscherfläche im Abhitzekessel (9) ist.

3. Gas- und Dampfkraftwerk (1) nach einem der Ansprüche 1 oder 2,
**dadurch gekennzeichnet, dass** die Austrittstemperatur des Abgases (7) aus dem Abhitzekessel in etwa 80°C beträgt.

4. Gas- und Dampfkraftwerk (1) nach einem der Ansprüche 1 bis 3,
**dadurch gekennzeichnet, dass** der Abhitzekessel (9) befeuert ist.

5. Gas- und Dampfkraftwerk (1) nach einem der Ansprüche 1 bis 4,
**dadurch gekennzeichnet, dass** die Temperatur des Abgases (7) vor dem Wärmetausch mit der Wärmetauscherfläche (31) im Bereich zwischen etwa 120°C und 150°C liegt.
